# EUROPEAN PATENT SPECIFICATION

(11) **EP 0 740 575 B1**
(45) Date of publication and mention of the grant of the patent: **11.11.1998**
(21) Application number: 95906904.8
(22) Date of filing: 23.01.1995
(51) Int. Cl.: B01D 47/02, B01D 50/00, F24F 3/16

(54) **AIR CLEANING APPARATUS**
VORRICHTUNG ZUR REINIGUNG VON LUFT
APPAREIL DE PURIFICATION D'AIR

(30) Priority: 21.01.1994 DK 9194
(43) Date of publication of application: 06.11.1996
(73) Proprietor: ECHBERG VENTIALTION OG FODERANLAEG APS, 8653 Them (DK)
(72) Inventor: JENSEN, Finn, Harley, DK-8600 Silkeborg (DK)
(74) Representative: Skoett-Jensen, Knud
(86) International application number: DK9500032
(87) International publication number: WO9519833

(56) References cited:
- CH-A- 500 752
- DE-A- 3 522 946
- GB-A- 1 155 326
- GB-A- 1 496 990
- US-A- 4 067 706
- DERWENT'S ABSTRACT, No. 84-299791/48, week 8448; & SU,A,1 085 617 (VORON TECH INST), 15 April 1984.

## Description

The present invention relates to an air cleaning apparatus for room air, primarily for current segregation of dust therefrom. Various filtering devices exist which can solve this function in a more or less efficient way, but it is often a matter of noising devices demanding maintenance, viz. change of the active filtering units. Besides, various devices for air washing by means of water are known, but they are relatively complicated and offer noticeable air flow resistance, whereby they call for a relatively high energy consumption (GB-A-1155236).

A dust-bearing air flow sent down against a water surface will deliver most of the dust to the water, when this is not quite still. At completely still water a delivery of dust will take place as well, but only in a starting phase, until a thin dust film on the water surface is formed. With only a faint agitation of the water the dust will be assimilated therein, whereby large amounts of dust can be absorbed.

As to devices, it will be sufficient that in a lead-down pipe against the water surface in a vessel is placed an axial fan forcing the air downwards with a screw motion, which in itself is enough to agitate the water surface, as some rotation in the water occurs. Already this may be sufficient for the surface tension to break in such a way that the dust travels freely down into the water. The receptivity of the water portion for the dust will generally speaking be preserved unchanged by the increasing dust concentration in the water, i.e. there will be no equivalence to a progressing choking of a filter, by which choking a change in operating conditions occurs. Thus, a water portion can normally assimilate a very large amount of dust before it becomes necessary to change the water, and so this change is limited to an outlet of the water portion and an inlet of an new portion, which should be an extremely easy and non-expensive arrangement. These objects are obtained by an apparatus as claimed in claim 1.

By the said design of the cleaner the dust in the air flow will be exposed to a cyclone effect, whereby it is concentrated in the middle of the air flow, so that it easily hits the water though simultaneously a deflection of the air flow occurs. Likewise, the suspended dust will gather in the middle of the vessel the more distinct the quicker the water rotates, and it will thus be possible to work with for instance a current, local drain with a compensating inlet of new water, whereby the apparatus can be working almost continually.

When only the air flow hits the water surface with a reasonable speed, it will not be particularly critical to control the air for contact with the water surface for that matter, i.e. the air can deflect freely from the downdraught area. In principle, there is no need for introducing any significant air flow resistance, whereby the apparatus can work with high efficiency with a relatively low energy consumption. The conduct will, however, be optimizable so that the best possible air sweeping of the water surface be effected.

In a simple design with an axial fan the effect can be intensified in that directly on the fan axle is placed a submerging prolongation, reaching into the water and there carrying a stirring blade.

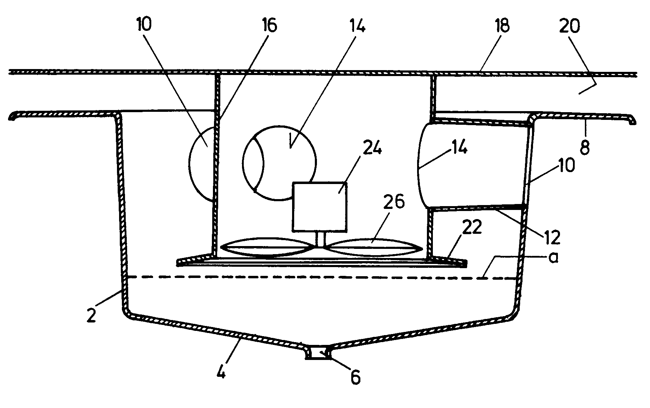

In the following the invention is explained further in connection with an embodiment of an apparatus shown in the drawing, which is a sectional view of the apparatus.

The apparatus shown is specially adapted for use in rooms with light inhalable dust, whereby the apparatus advantageously can be placed close to the ceiling, for instance in a car paint garage. The apparatus comprises a vessel 2 with a centre-oriented downwards sloping base 4, having a central drainage stub 6 and an upper, protruding edge flange 8. In the circular side wall of the vessel are shaped three holes 10, which through radial pipes 12 are connected to corresponding holes 14 in an inner, vertical centre pipe 16. On top this pipe is closed with a widely protruding plate 18, which, together with the underlying edge flange 8, forms an outwards open ring gap 20 situated significantly outside the circle of the holes 10 in the sides of the vessel 2.

The central pipe 16 is at the bottom crowned with a protruding collar portion 22 placed in a certain distance above the bottom of the vessel 4, and in this lower end piece of the pipe 16 is placed an axial fan with a motor 24 and a fan blade 26, the motor 24 being fixed to the pipe 16 by means of non-shown radial ribbs. The blade 26 is placed almost completely down at the lower end pipe 16.

Water is filled into the vessel 2 to the level marked a in a relatively short distance beneath the pipe end flange 22. This inlet may be arranged automatically by means of an inlet valve controlled by a non-shown level sensor.

During operation of the blower 24,26 room air will be sucked in through the holes 10 and this air will by the rotating blade 26 be pressed directly down against the water surface a, which will then happen with such a powerful rotation of the air that this will actuate the water surface to conduct a rotating and an associated turbolent movement, which spreads to the lower water levels in the vessel 2. Hereby the water is stirred sufficiently for breaking of its surface tension, and thus the dust or liquid particles in the sucked in air will willingly be taken to assimilation in the water, while the thereby cleaned air will escape through the ring gap between the water surface and the outer edge of the lower pipe flange 22, from where the air is pressed upwards in the vessel 2, up to a horizontal blow-out through the upper and outer ring gap 20.

By the rotation of the water filling created by the blade 26, the suspended light dust will gather at the middle of the vessel 2, and therefore through the stub 6 there can be conducted a drainage of a special dirty water, which then can be let to the sewerage system or to a special reservoir through a non-shown conduit.

If the occurring inhalable dust is of a heavier kind, it may be appropriate to arrange the apparatus down by the floor, whereby it obviously will be actual to let the central pipe 16 be open upwards under avoidance of the radial pipes 12 and the plate parts 8 and 20.

It may be necessary to use additional, separate means for suitably agitating of the water or only crushing of the water surface, respectively.

If desired, the apparatus may be designed with an inlet pipe 16 being connected with more different inlet openings in the room, in which the air dust abatement is desired.

Originally the apparatus is meant as a lightweight unit, for instance for mobile position on a floor, however, it may very well be placed as a fixed installation whereever in the relevant room, and besides, it may be designed as a big central system for servicing more rooms through suitable channel connections.

## Claims

1. Apparatus for cleaning/washing of dust-laden room air by contact between an air flow and a cleaning liquid, preferably water, comprising a liquid vessel (2) for containing a liquid portion and a downlead pipe (16) arranged thereabove for piloting down a flow of the room air, generated by blower means, directly down against the liquid surface in the vessel, means also being provided for agitating at least the underlying surface area of the liquid portion, characterized by the means for both generating the air flow and agitating the liquid surface being constituted by an axial blower (26) placed in the downlead pipe in such a short distance from the liquid surface that the latter is set into rotation by the screw motion imparted to the air flow by the axial blower in order to additionally achieve a cyclone effect in this flow, the lower mouthing (22) of the downlead pipe being located in such a high position relative to the vessel that the latter can be filled with liquid to a level at which there will occur, below the pipe mouthing and in operation, an annular open exhaust slit for the air flow without any significantly reduced outflow area therefore.

2. Apparatus according to claim 1, characterized in that it comprises additional, separate liquid agitation means such as stirring devices, blowing nozzles or vibrator means.

3. Apparatus according to claim 1, characterized in that the agitation means for the liquid are designed to create a rotating movement of the liquid in the vessel, and in that at the bottom of said vessel is placed a drainage connection underneath the central area of said rotation.

4. Apparatus according to claim 1, characterized in that it is designed with means for intermittent or current drainage of liquid from the vessel and means for level controlled inlet of fresh liquid thereto.

5. Apparatus according to claim 1, characterized in that the vessel has an upper, protruding edge plate and one or more side holes above the liquid level, which or each of which holes are connected with an inwards leading pipe being connected with a side hole in said downlead pipe, which stretches upwards to a level slightly above said edge plate of the vessel, where the downlead pipe is terminated with a cover plate, which protrudes beyond the edge plate of the vessel for forming of an annular exhaust slit located above and outside the air intake hole or -holes in the side wall of the vessel.

6. Apparatus according to claim 1, characterized in that the downlead pipe at its lower end being crowned with an outwardly protruding collar portion (22).

## Patentansprüche

1. Vorrichtung zum Reinigen/Waschen von mit Staub angereicherter Raumluft durch Kontakt zwischen einem Luftstrom und einer Reinigungsflüssigkeit, vorzugsweise Wasser, wobei die Vorrichtung einen Flüssigkeitsbehälter (2) zur Aufnahme einer Flüssigkeitsmenge umfaßt sowie ein darüber angeordnetes, nach unten führendes Rohr (16), das den durch ein Gebläse erzeugten Raumluftstrom direkt nach unten gegen die Oberfläche der Flüssigkeit in dem Behälter führt, wobei weiterhin eine Einrichtung zum Aufrühren zumindest des unterhalb des Rohrs befindlichen Bereichs der Flüssigkeitsoberfläche vorgesehen ist, dadurch gekennzeichnet, daß die den Luftstrom erzeugende und die Flüssigkeitsoberfläche aufrührende Einrichtung als Axialgebläse (20) ausgebildet ist und in dem nach unten führenden Rohr in so geringer Entfernung von der Flüssigkeitsoberfläche angeordnet ist, daß diese durch die von dem Axialgebläse auf den Luftstrom übertragene Schraubenbewegung in Drehung versetzt wird, um zusätzlich im Luftstrom einen Zykloneffekt zu erzielen, wobei der unten befindliche Ausgang (22) des nach unten führenden Rohrs in bezug zum Behälter so weit oben angeordnet ist, daß dieser bis zu einem bestimmten Pegel mit Flüssigkeit angefüllt werden kann, bei dem unterhalb des Rohrausgangs und im Betrieb ein ringförmiger offener Abluftspalt für den Luftstrom verbleibt, ohne dadurch den Abfließbereich wesentlich zu reduzieren.

2. Vorrichtung nach Anspruch 1, dadurch gekennzeichnet, daß sie zusätzliche, separate Einrichtungen zum Aufrühren der Flüssigkeit aufweist, wie z.B. Rührmittel, Blasdüsen oder Vibriereinrichtungen.

3. Vorrichtung nach Anspruch 1, dadurch gekennzeichnet, daß die Einrichtungen zum Aufrühren der Flüssigkeit so ausgebildet sind, daß sie eine Drehbewegung der Flüssigkeit in dem Behälter hervorrufen und daß am Boden des Behälters unterhalb des Drehmittelpunkts ein Abfluß angeordnet ist.

4. Vorrichtung nach Anspruch 1, dadurch gekennzeichnet, daß sie eine Einrichtung zum unterbrochenen oder fortlaufenden Flüssigkeitsablauf vom Behälter und eine Einrichtung zum Pegel-kontrollierten Einlaß neuer Flüssigkeit in diesen aufweist.

5. Vorrichtung nach Anspruch 1, dadurch gekennzeichnet, daß der Behälter eine obere, vorstehende Seitenplatte und ein oder mehre seitliche Löcher oberhalb des Flüssigkeitspegels aufweist, das/die mit einem nach innen führenden Rohr verbunden ist/sind, welches jeweils mit einem in dem nach unten führenden Rohr ausgebildeten seitlichen Loch verbunden ist, wobei das nach unten führende Rohr oben bis etwas über die Höhe der Seitenplatte des Behälters reicht und unten in einer Abdeckplatte endet, welche über die Seitenplatte des Behälters vorsteht, um einen ringförmigen Abluftschlitz oberhalb und außerhalb des bzw. der Lufteinlaßlochs/löcher in der Seitenwand des Behälters zu bilden.

6. Vorrichtung nach Anspruch 1, dadurch gekennzeichnet, daß das nach unten führende Rohr an seinem unteren Ende in einem nach außen vorstehenden Kragenbereich (22) ausläuft.

## Revendications

1. Appareil pour le nettoyage/lavage d'air ambiant chargé de poussière par contact entre un flux d'air et un liquide de nettoyage, de préférence de l'eau, comprenant une cuve de liquide (2) pour contenir une partie de liquide et un conduit de descente (16) agencé au-dessus pour guider vers le bas un flux de l'air ambiant, engendré par des moyens de soufflage, directement vers le bas contre la surface de liquide dans la cuve, des moyens étant également prévus pour agiter au moins la zone de surface sous-jacente de la partie de liquide,
caractérisé par des moyens à la fois pour engendrer le flux d'air et pour agiter la surface de liquide, qui sont constitués par un ventilateur axial (26) placé dans le conduit de descente à une courte distance de la surface de liquide de sorte que ce dernier est mis en rotation par le mouvement hélicoïdal communiqué au flux d'air par le ventilateur axial afin de réaliser, de façon additionnelle, un effet de cyclone dans ce flux, l'embouchure inférieure (22) du conduit de descente étant située à une position élevée par rapport à la cuve de sorte que cette dernière peut être remplie de liquide à un niveau auquel il apparaîtra, en dessous de l'embouchure du tuyau et en fonctionnement, une fente d'évacuation ouverte, annulaire, pour le flux d'air sans une quelconque zone de sortie réduite de façon significative.

2. Appareil selon la revendication 1,
caractérisé en ce qu'il comprend des moyens d'agitation de liquide séparés, additionnels, tels que des dispositifs de mélangeage, des buses de soufflage ou des moyens vibreurs.

3. Appareil selon la revendication 1,
caractérisé en ce que les moyens d'agitation pour le liquide sont conçus pour créer un mouvement de rotation du liquide dans la cuve, et en ce que, au fond de ladite cuve, est placée une liaison de drainage audessous de la zone centrale de ladite rotation.

4. Appareil selon la revendication 1,
caractérisé en ce qu'il est conçu avec des moyens pour le drainage continu ou intermittent du liquide de la cuve et avec des moyens pour l'entrée commandée du niveau de liquide frais vers celle-ci.

5. Appareil selon la revendication 1,
caractérisé en ce que la cuve présente une plaque de bord en saillie, supérieure, et un ou plusieurs trous latéraux au-dessus du niveau de liquide, lesquels ou chacun desquels trous sont reliés à un conduit d'amenée vers l'intérieur qui est relié à un trou latéral dans ledit conduit de descente, qui s'étend vers le haut jusqu'à un niveau légèrement au-dessus de ladite plaque de bord de la cuve, où le conduit de descente se termine par une plaque de recouvrement, qui fait saillie au-delà de la plaque de bord de la cuve pour former une fente d'évacuation annulaire située au-dessus et à l'extérieur du trou ou des trous d'entrée d'air dans la paroi latérale de la cuve.

6. Appareil selon la revendication 1,
caractérisé en ce que le conduit de descente, à son extrémité inférieure, présente une couronne ayant une partie de collet (22) en salle vers l'extérieur.
